# EUROPEAN PATENT APPLICATION

(11) **EP 4 566 927 A1**
(43) Date of publication of application: **11.06.2025**
(21) Application number: 24209221.1
(22) Date of filing: 28.10.2024
(51) Int. Cl.: B62J 6/04, B60Q 1/00, B62K 11/00

(54) **STRADDLED VEHICLE TAILLIGHT**

(30) Priority: 08.12.2023 JP 2023207378
(71) Applicant: Yamaha Hatsudoki Kabushiki Kaisha, Iwata-shi, Shizuoka 438-8501 (JP)
(72) Inventor: OHTA, Mitsuaki, Iwata-shi, 4388501 (JP); SAKATA, Kohei, Iwata-shi, 4388501 (JP)
(74) Representative: Studio Torta S.p.A.

(57) **Abstract**

There is disclosed a straddled vehicle including a seat (5), a vehicle frame (9), and a taillight unit (3); the vehicle frame (9) including a seat frame (14, 15) that extends in a vehicle back-and-forth direction and supports the seat (5); the taillight unit (3) being disposed behind the seat frame (14, 15) and overlaps with a rear end (14a, 15a) of the seat frame (14, 15) in a vehicle rear view; the taillight unit (3) including at least one board (20), a support member (21) supporting the at least one board (20), an outer lens (26) connected to the support member (21), and a relief portion (27) avoiding interference of the taillight unit (3) with the rear end (14a, 15a) of the seat frame (14, 15); the support member (21) including a seal surface (21a) coming in contact with the outer lens (26); the relief portion (27) is disposed inside the seal surface (21a).

## Description

### Technical field

The present invention relates to a straddled vehicle.

### Background Information

A straddled vehicle includes a taillight unit disposed on a vehicle rear side (Japan Laid-open Patent Application Publication No. 2010-215215). The taillight unit is disposed behind a seat frame supporting a seat such that a sufficient installation space can be ensured for the taillight unit.

The taillight unit has been conventionally disposed behind the seat frame; hence, it is concerned that the straddled vehicle greatly overhangs on the vehicle rear side. It is an object of the present invention to provide a straddled vehicle that can be inhibited from greatly overhanging on a vehicle rear side.

### Description of the invention

A straddled vehicle according to an aspect of the present invention includes a seat, a vehicle body frame, and a taillight unit. The vehicle body frame includes a seat frame that extends in a vehicle back-and-forth direction and supports the seat. The taillight unit is disposed behind the seat frame and overlaps with a rear end of the seat frame in a vehicle rear view. The taillight unit includes at least one board, a support member supporting the at least one board, an outer lens connected to the support member, and a relief portion avoiding interference of the taillight unit with the rear end of the seat frame. The support member includes a seal surface coming in contact with the outer lens. The relief portion is disposed inside the seal surface.

In the straddled vehicle according to the present aspect, the relief portion of the taillight unit is disposed inside the seal surface of the support member; hence, it is made possible to dispose the seal surface further on a vehicle front side than the rear end of the seat frame. Accordingly, it is made possible to provide a straddled vehicle that can be inhibited from greatly overhanging on a vehicle rear side.

The rear end of the seat frame may be disposed further on a vehicle rear side than at least part of the seal surface. This configuration results in that the seal surface, at least in part, is disposed further on the vehicle front side than the rear end of the seat frame; hence, the straddled vehicle can be further inhibited from greatly overhanging on the vehicle rear side.

The relief portion may be provided in the support member and may be shaped to be recessed from a vehicle front side to the vehicle rear side. The rear end of the seat frame may be accommodated in the relief portion. In this case, the shape of the relief portion can be easily formed. The rear end of the seat frame can be protected by the relief portion. Besides, the taillight unit can be fixed to the seat frame through the relief portion.

The taillight unit may further include a light guide body disposed between the support member and the outer lens. The light guide body overlaps in part with the relief portion in a vehicle plan view. In this case, the straddled vehicle can be inhibited from greatly overhanging on the vehicle rear side; simultaneously, the taillight unit can be elongated in light emission size in a vehicle width direction.

The relief portion may penetrate the support member in the vehicle back-and-forth direction. The seat frame may penetrate the support member through the relief portion in the vehicle back-and-forth direction. In this case, the taillight unit can be disposed further on the vehicle front side with respect to the seat frame; hence, the straddled vehicle can be further inhibited from greatly overhanging on the vehicle rear side.

The relief portion may penetrate the support member and the outer lens in the vehicle back-and-forth direction. The seat frame may penetrate the taillight unit through the relief portion in the vehicle back-and-forth direction. In this case, the taillight unit can be disposed further on the vehicle front side with respect to the seat frame; hence, the straddled vehicle can be further inhibited from greatly overhanging on the vehicle rear side.

The straddled vehicle may further include a tail cover that is disposed behind the outer lens and covers the relief portion from behind. In this case, the rear end of the seat frame can be protected by the tail cover.

Overall, the straddled vehicle according to the present invention can be inhibited from greatly overhanging on the vehicle rear side.

### Brief description of the drawings

FIG. 1 is a side view of a straddled vehicle.
FIG. 2 is a rear view of a taillight unit and part of a seat frame.
FIG. 3 is a plan view of the taillight unit and part of the seat frame.
FIG. 4 is a side view of the taillight unit and part of the seat frame.
FIG. 5 is a schematic cross-sectional view of the taillight unit.
FIG. 6 is a schematic cross-sectional view of the taillight unit.
FIG. 7 is a rear view of an outer lens.
FIG. 8 is a diagram for explaining a first modification of the taillight unit.
FIG. 9 is a diagram for explaining a second modification of the taillight unit.
FIG. 10 is a diagram for explaining the second modification of the taillight unit.
FIG. 11 is a diagram for explaining the second modification of the taillight unit.

### Embodiments of the invention

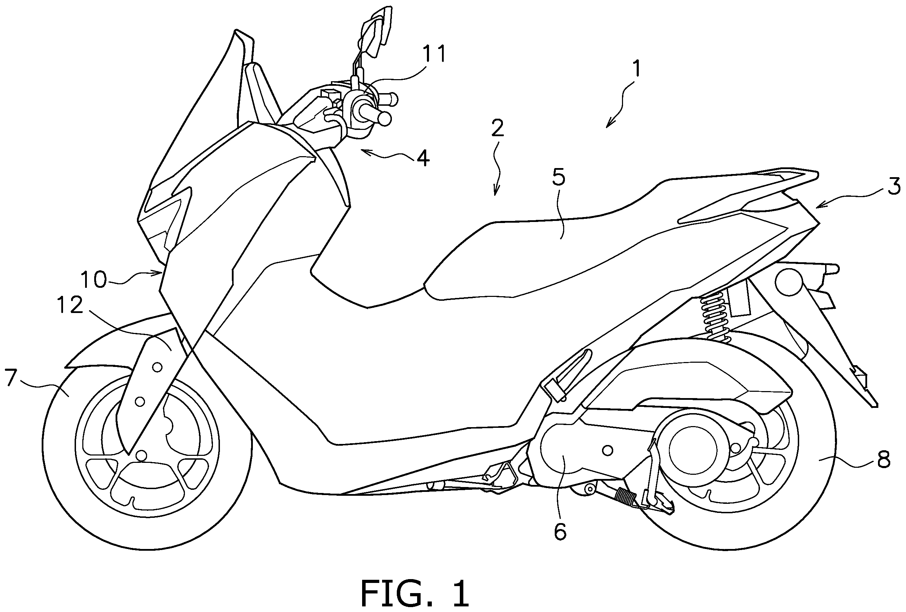

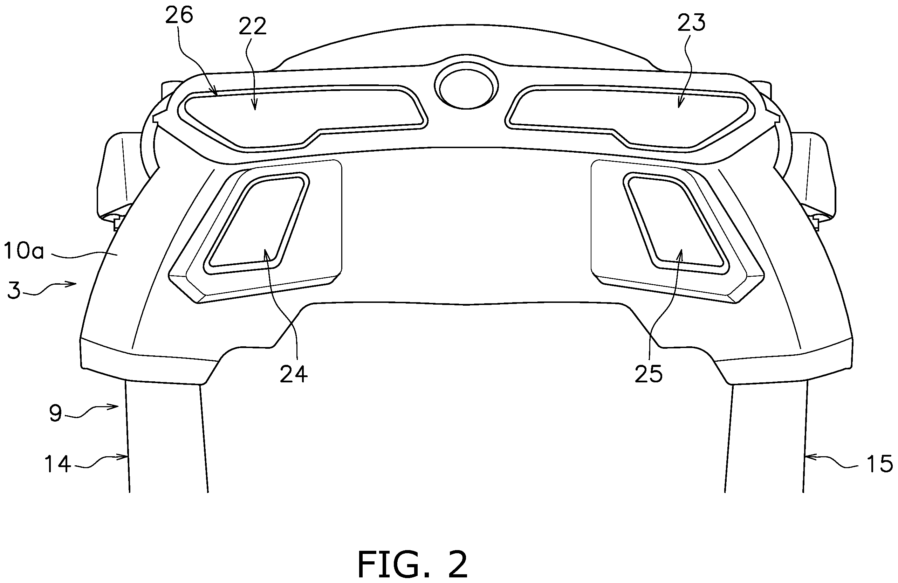

A straddled vehicle according to a preferred embodiment will be hereinafter explained with reference to drawings. FIG. 1 is a side view of a straddled vehicle 1 according to the preferred embodiment. In the present preferred embodiment, the straddled vehicle 1 is a scooter. As shown in FIG. 1, the straddled vehicle 1 includes a vehicle body 2 and a taillight unit 3. The vehicle body 2 includes a steering device 4, a seat 5, a power unit 6, a front wheel 7, a rear wheel 8, a vehicle body frame 9 (see FIG. 2), and a vehicle body cover 10. It should be noted that in the following explanation, the directional terms "right" and "left" are defined as meaning right and left directions seen from a rider seated on the seat 5.

The steering device 4 includes a handle 11 and a front fork 12. The handle 11 is connected to the front fork 12. The handle 11 is operable right and left by the rider. The front fork 12 is connected to the front wheel 7. The seat 5 is disposed behind the steering device 4. The power unit 6 is disposed below the seat 5. The power unit 6 includes, for instance, an internal combustion engine and a transmission. Alternatively, the power unit 6 may include an electric motor. The front wheel 7 is supported by the front fork 12. The rear wheel 8 is rotatably supported by the power unit 6. The rear wheel 8 may be rotatably supported by a swing arm.

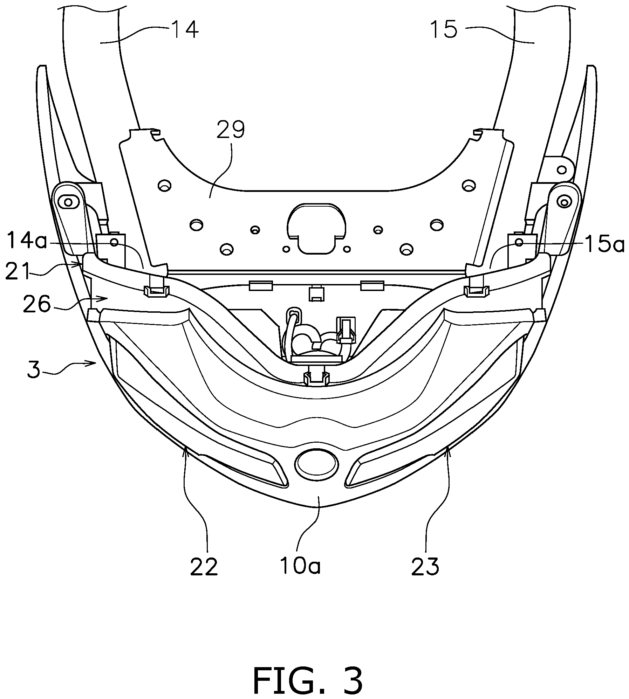

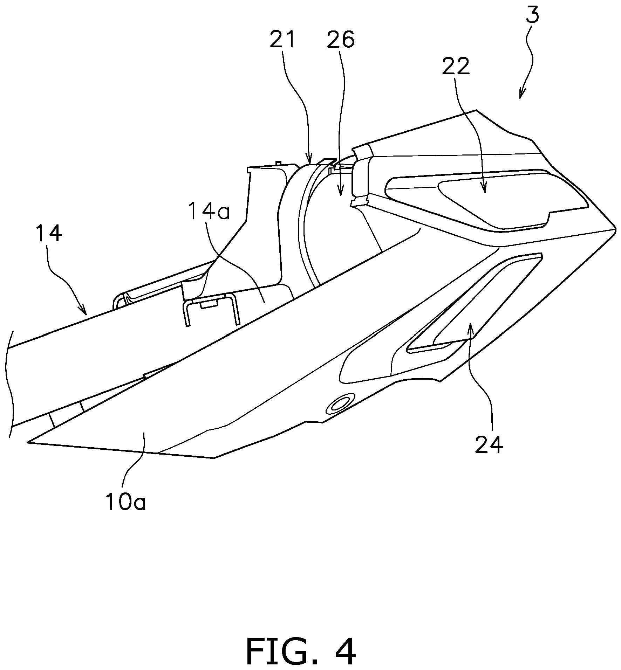

As shown in FIGS. 2 to 4, the vehicle body frame 9 includes seat frames 14 and 15. The seat frames 14 and 15 extend in a vehicle back-and-forth direction. The seat frames 14 and 15 are disposed below the seat 5. The seat frames 14 and 15 support the seat 5. The seat frames 14 and 15 are pipe-like members.

The seat frames 14 and 15 are composed of a left seat frame 14 and a right seat frame 15. The left seat frame 14 is disposed on the left side of the right seat frame 15. The left seat frame 14 is away from the right seat frame 15 in a vehicle width direction. The right seat frame 15 is shaped bilaterally symmetric to the left seat frame 14. A rear part of the left seat frame 14 and that of the right seat frame 15 are coupled to each other by a cross plate 29.

The vehicle body cover 10 covers the vehicle body frame 9 from the surroundings of the vehicle body frame 9. The vehicle body cover 10 is supported by the vehicle body frame 9. The vehicle body cover 10 includes a tail cover 10a. The tail cover 10a is disposed on a vehicle rear side and covers the taillight unit 3 from the vehicle rear side.

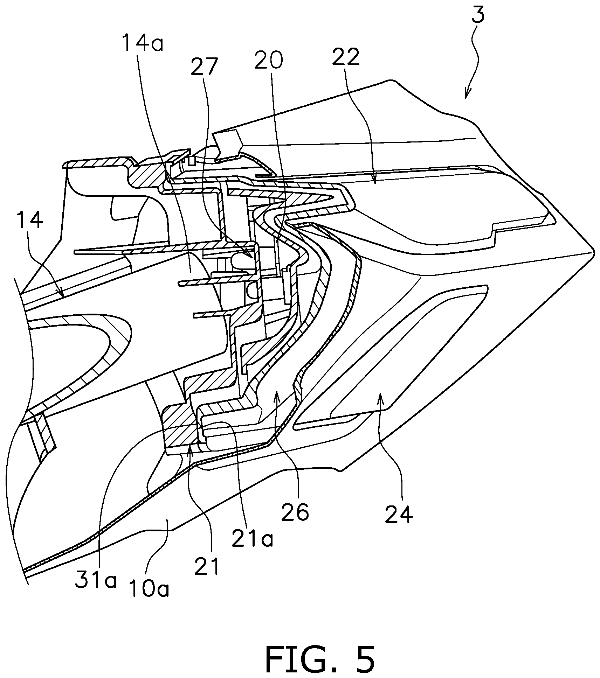

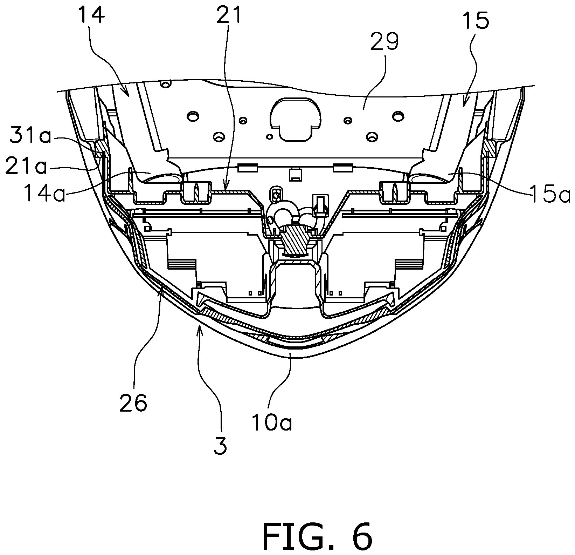

The taillight unit 3 is attached to the vehicle body cover 10. The taillight unit 3 is disposed behind the seat frames 14 and 15. FIG. 5 is a schematic cross-sectional view of the taillight unit 3 cut along a plane oriented orthogonal to the vehicle width direction. FIG. 6 is a schematic cross-sectional view of the taillight unit 3 cut along a plane oriented orthogonal to a vehicle up-and-down direction. In FIGS. 5 and 6, members in part are omitted in illustration. As shown in FIGS. 5 and 6, the taillight unit 3 overlaps with rear ends 14a and 15a of the seat frames 14 and 15 when seen from a vehicle rear side. The rear ends 14a and 15a of the seat frames 14 and 15 are disposed further on an inner side than both vehicle width directional ends of the taillight unit 3 in the vehicle width direction.

The taillight unit 3 includes at least one board 20, a support member 21, a left and right pair of taillights 22 and 23, a left and right pair of flashers 24 and 25, an outer lens 26, and a relief portion 27.

The at least one board 20 is disposed on the same side as the rear surface of the support member 21. The at least one board 20 is accommodated in a space formed by the support member 21 and the outer lens 26. The at least one board 20 overlaps with the rear ends 14a and 15a of the seat frames 14 and 15 in the vehicle rear view. Each of the at least one board 20 is a printed circuit board, to which a light source (not shown in the drawings) is connected. In the present preferred embodiment, the at least one board 20 is composed of four boards provided in correspondence to the left and right pair of taillights 22 and 23 and the left and right pair of flashers 24 and 25, respectively. The four boards are connected to the left and right pair of taillights 22 and 23 and the left and right pair of flashers 24 and 25, respectively, on a one-to-one basis.

The support member 21 is made of resin and extends in the vehicle width direction. The support member 21 has a larger dimension in the vehicle width direction than in the vehicle up-and-down direction. The support member 21 is shaped to be recessed to the vehicle rear side in a vehicle plan view. The vehicle width directional ends of the support member 21 are both located further on the front side than a vehicle width directional middle part thereof. The vehicle width directional ends of the support member 21 are both disposed further on outer sides than the rear ends 14a and 15a of the seat frames 14 and 15 in the vehicle width direction. The support member 21 covers the rear ends 14a and 15a of the seat frames 14 and 15 from the outer sides in the vehicle width direction. The support member 21 overlaps with the rear ends 14a and 15a of the seat frames 14 and 15 in a vehicle side view. The support member 21 overlaps with the rear ends 14a and 15a of the seat frames 14 and 15 in the vehicle plan view.

The support member 21 includes a seal surface 21a. The seal surface 21a is disposed on the same side as the rear surface of the support member 21. The seal surface 21a is shaped along the outer edge of the support member 21. The seal surface 21a has an approximately annular shape as seen from the vehicle rear side. The seal surface 21a is shaped to be recessed to a vehicle front side.

The seal surface 21a comes in contact with the outer lens 26. The seal surface 21a is a part of the support member 21, to which the outer lens 26 is attached. When the outer lens 26 is attached to the seal surface 21a, the space formed by the support member 21 and the outer lens 26 is sealed. The seal surface 21a overlaps with the seat frames 14 and 15 in the vehicle plan view. As shown in FIGS. 5 and 6, the seal surface 21a overlaps with the seat frames 14 and 15 in the vehicle side view. The seal surface 21a does not overlap with the rear ends 14a and 15a of the seat frames 14 and 15 in the vehicle rear view. The rear ends 14a and 15a of the seat frames 14 and 15 are disposed further on the vehicle rear side than at least part of the seal surface 21a. The rear ends 14a and 15a of the seat frames 14 and 15 are disposed further on the vehicle rear side than the vehicle width directional ends of the seal surface 21a.

The left and right pair of taillights 22 and 23 is composed of a first taillight 22 and a second taillight 23. The first taillight 22 is disposed on the left side of the second taillight 23. The first taillight 22 is remote from the second taillight 23 in the vehicle width direction. The second taillight 23 is shaped bilaterally symmetric to the first taillight 22. Each of the first and second taillights 22 and 23 includes a light source, a light guide body, and an inner lens, all of which are not shown in the drawings.

The left and right pair of flashers 24 and 25 is disposed below the left and right pair of taillights 22 and 23. The left and right pair of flashers 24 and 25 is composed of a first flasher 24 and a second flasher 25. The first flasher 24 is disposed below the first taillight 22. The second flasher 25 is disposed below the second taillight 23. The second flasher 25 is shaped bilaterally symmetric to the first flasher 24. Each of the first and second flashers 24 and 25 includes a light source, a light guide body, and an inner lens, all of which are not shown in the drawings.

The left and right pair of taillights 22 and 23 and the left and right pair of flashers 24 and 25 are integrated in the taillight unit 3.

The outer lens 26 is connected to the support member 21. The outer lens 26 is disposed behind the support member 21. The outer lens 26 overlaps with the rear ends 14a and 15a of the seat frames 14 and 15 in the vehicle plan view. The outer lens 26 enables the light emitted from the left and right pair of taillights 22 and 23 and that emitted from the left and right pair of flashers 24 and 25 to transmit therethrough.

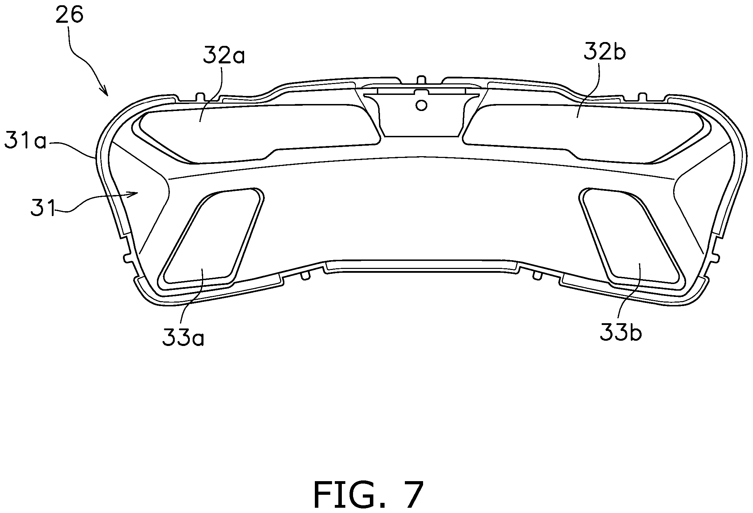

FIG. 7 is a rear view of the outer lens 26. The outer lens 26 includes a body 31, a left and right pair of first lenses 32a and 32b and a left and right pair of second lenses 33a and 33b.

The body 31 is fixed to the support member 21. The body 31 includes a contact surface 31a coming in contact with the seal surface 21a. The contact surface 31a is fixed to the seal surface 21a, while in close contact therewith. The contact surface 31a is shaped along the outer edge of the body 31.

The left and right pair of first lenses 32a and 32b covers the left and right pair of taillights 22 and 23 from the vehicle rear side. The left and right pair of first lenses 32a and 32b is exposed from the tail cover 10a. The first lens 32a is disposed behind the first taillight 22. The first lens 32b is disposed behind the second taillight 23.

The left and right pair of second lenses 33a and 33b covers the left and right pair of flashers 24 and 25 from the vehicle rear side. The left and right pair of second lenses 33a and 33b is exposed from the tail cover 10a. The second lens 33a is disposed behind the first flasher 24. The second lens 33b is disposed behind the second flasher 25.

The left and right pair of first lenses 32a and 32b and the left and right pair of second lenses 33a and 33b are fixed to be integrated with each other. The left and right pair of first lenses 32a and 32b and the left and right pair of second lenses 33a and 33b are fixed to the body 31 by, for instance, insert molding.

The relief portion 27 is provided for avoiding interference between the taillight unit 3 and the rear ends 14a and 15a of the seat frames 14 and 15. The relief portion 27 is shaped to avoid interference of the taillight unit 3 with the rear ends 14a and 15a of the seat frames 14 and 15. The relief portion 27 is provided in the support member 21. The relief portion 27 is disposed on the same side as the front surface of the support member 21. The relief portion 27 is disposed behind the rear ends 14a and 15a of the seat frames 14 and 15. The relief portion 27 is remote from the rear ends 14a and 15a of the seat frames 14 and 15 in the vehicle back-and-forth direction. The relief portion 27 overlaps with the rear ends 14a and 15a of the seat frames 14 and 15 in the vehicle rear view.

The relief portion 27 is disposed inside the seal surface 21a. The relief portion 27 is disposed in a region enclosed by the seal surface 21a in the vehicle rear view. The relief portion 27 does not overlap with the seal surface 21a in the vehicle rear view. The relief portion 27 is disposed on the inner side of both vehicle width directional ends of the seal surface 21a in the vehicle width direction. The relief portion 27 is disposed on the right side of the left end of the seal surface 21a, while being disposed on the left side of the right end of the seal surface 21a. The relief portion 27 is disposed below the upper end of the seal surface 21a, while being disposed above the lower end of the seal surface 21a.

In the straddled vehicle 1, the relief portion 27 of the taillight unit 3 is disposed inside the seal surface 21a of the support member 21; hence, it is made possible to dispose the seal surface 21a further on the vehicle front side than the rear ends 14a and 15a of the seat frames 14 and 15. Accordingly, the straddled vehicle can be inhibited from greatly overhanging on the vehicle rear side.

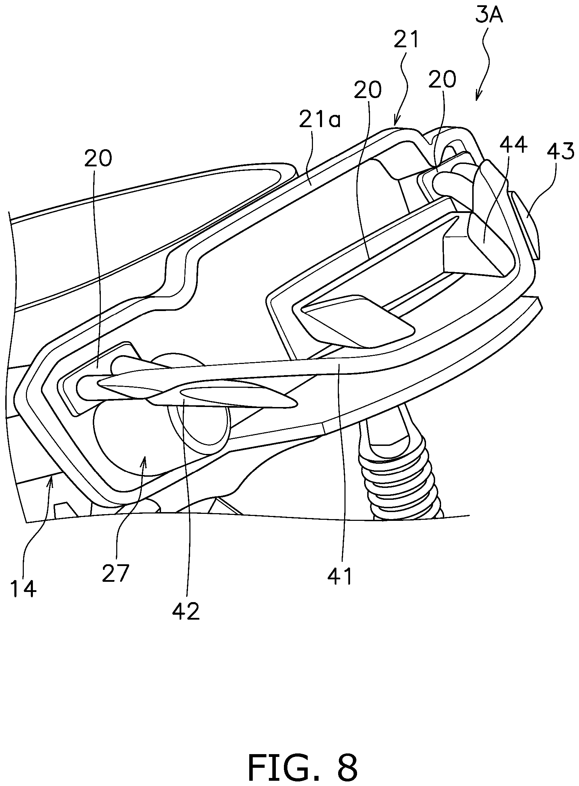

FIG. 8 is a diagram for explaining a first modification of the taillight unit 3. In a taillight unit 3A according to the first modification, relief portion 27 is shaped to be recessed from the vehicle front side to the vehicle rear side. Each relief portion 27 has a closed-end tubular shape. A rear end 14a of the seat frame 14 is accommodated in the relief portion 27. The taillight unit 3A further includes light guide bodies 41 to 44 disposed between the support member 21 and the outer lens 26. The light guide body 41 is provided in correspondence to a taillight. The light guide bodies 42 and 43 are provided in correspondence to a left and right pair of flashers. The light guide body 44 is provided in correspondence to a brake lamp.

As shown in FIG. 8, the light guide body 41 overlaps in part with the relief portion 27 in the vehicle plan view. The light guide body 41 is disposed in part above the relief portion 27. The light guide body 42 overlaps in part with the relief portion 27 in the vehicle plan view. The light guide body 42 is disposed in part above the relief portion 27. The at least one board 20 overlaps with the relief portion 27 and the seat frame 14 in the vehicle plan view. Here, the board 20, to which the light guide bodies 41 and 42 are connected, overlaps with the relief portion 27 and the seat frame 14 in the vehicle plan view. It should be noted that the light guide body 41 may be configured to be disposed in part below the relief portion 27; likewise, the light guide body 42 may be configured to be disposed in part below the relief portion 27.

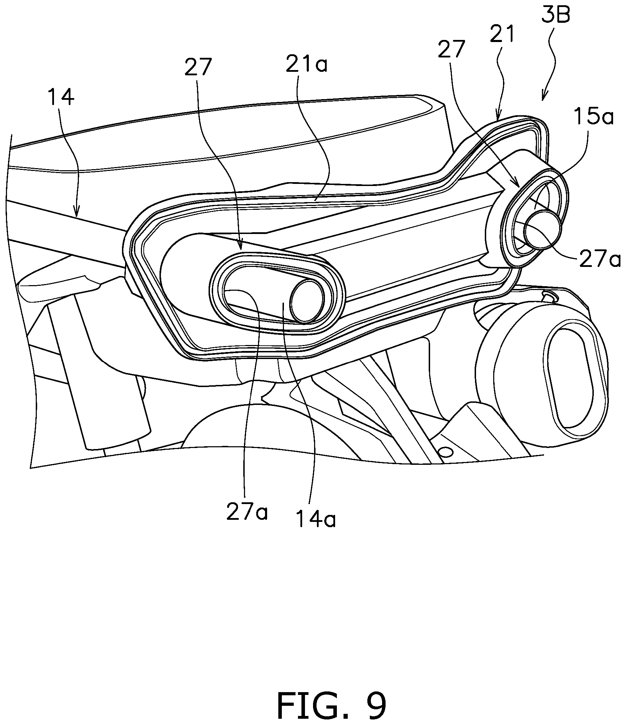

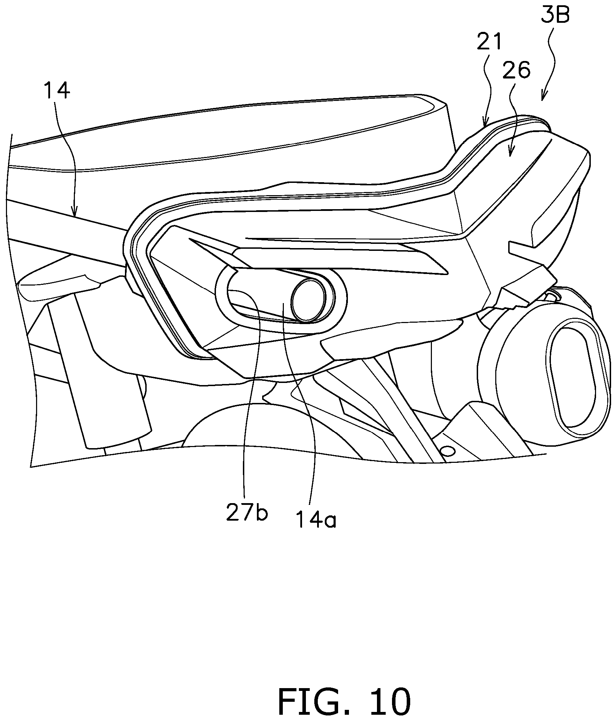

FIGS. 9 to 11 are diagrams for explaining a second modification of the taillight unit 3. In FIG. 9, the outer lens 26 and the tail cover 10a are omitted in illustration, whereas in FIG. 10, the tail cover 10a is omitted in illustration.

As shown in FIG. 9, in a taillight unit 3B according to the second modification, relief portions 27 penetrate the support member 21 in the vehicle back-and-forth direction. When described in detail, each relief portion 27 includes a first through hole 27a. The first through hole 27a is shaped to penetrate the support member 21 in the vehicle back-and-forth direction. The seat frames 14 and 15 penetrate the support member 21 through the relief portions 27 in the vehicle back-and-forth direction. The seat frames 14 and 15 protrude from the support member 21 to the vehicle rear side. It should be noted that the seal surface 21a is provided on the circumferential edge of each first through hole 27a as well.

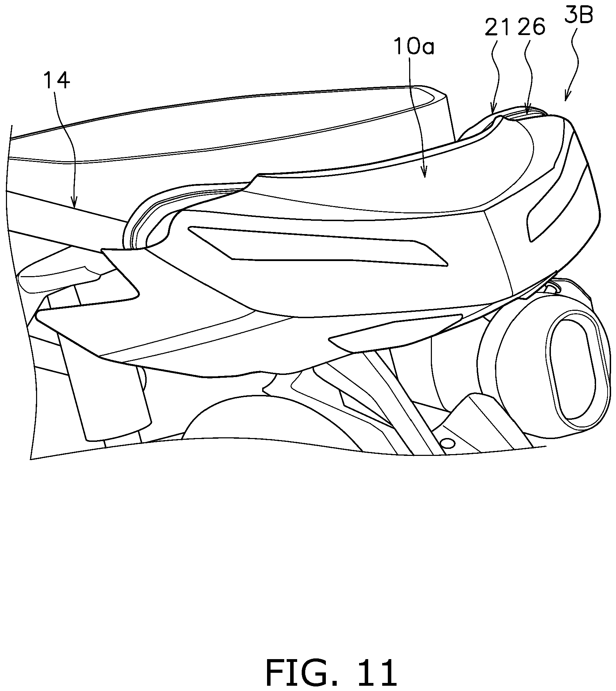

As shown in FIG. 10, the relief portions 27 penetrate the outer lens 26 in the vehicle back-and-forth direction. When described in detail, each relief portion 27 includes a second through hole 27b. The second through hole 27b is shaped to penetrate the body 31 of the outer lens 26 in the vehicle back-and-forth direction. The seat frames 14 and 15 penetrate the taillight unit 3B through the relief portions 27 in the vehicle back-and-forth direction. The seat frames 14 and 15 protrude from the taillight unit 3B to the vehicle rear side. As shown in FIG. 11, the relief portions 27 and the rear ends 14a and 15a of the seat frames 14 and 15 are covered, from the vehicle rear side, with the tail cover 10a disposed behind the outer lens 26.

One preferred embodiment of the present invention has been explained above. However, the present invention is not limited to the preferred embodiment described above, and a variety of changes can be made without departing from the gist of the present invention.

The straddled vehicle 1 may be a vehicle of another type such as a sport type, a street type, an off-road type, or a moped type.

The taillight unit 3 may be changed in structure. The support member 21 and the outer lens 26 may be changed in shape. The seal surface 21a may be changed in positional arrangement or shape. The left and right pair of taillights 22 and 23 and the left and right pair of flashers 24 and 25 may be changed in positional arrangement or shape.

### REFERENCE SIGNS LIST

3: Taillight unit, 5: Seat, 9: Vehicle body frame, 10a: Tail cover, 14: Seat frame, 20: Board, 21: Support member, 26: Outer lens, 27: Relief portion, 41: Light guide body

## Claims

1. A straddled vehicle (1) comprising:
a seat (5);
a vehicle body frame (9) including a seat frame (14, 15), the seat frame (14, 15) extending in a vehicle back-and-forth direction, the seat frame (14, 15) being configured to support the seat (5); and
a taillight unit (3) disposed behind the seat frame (14, 15), the taillight unit (3) overlapping with a rear end (14a, 15a) of the seat frame (14, 15) in a vehicle rear view, wherein
the taillight unit (3) includes at least one board (20), a support member (21), an outer lens (26), and a relief portion (27), the support member (21) being configured to support the at least one board (20), the outer lens (26) connected to the support member (21), the relief portion (27) being configured to avoid interference with the rear end (14a, 15a) of the seat frame (14, 15),
the support member (21) includes a seal surface (21a) coming in contact with the outer lens (26), and
the relief portion (27) is disposed inside the seal surface (21a).

2. The straddled vehicle according to claim 1, wherein the rear end of the seat frame (14, 15) is disposed further on a vehicle rear side than at least part of the seal surface (21a).

3. The straddled vehicle according to claim 1 or 2, wherein
the relief portion (27) is provided in the support member (21), the relief portion (27) shaped to be recessed from a vehicle front side to a vehicle rear side, and
the rear end of the seat frame (14, 15) is accommodated in the relief portion (27).

4. The straddled vehicle according to claim 1 or 2, wherein
the taillight unit (7) further includes a light guide body (41) disposed between the support member (21) and the outer lens (26), and
the light guide body (41) overlaps in part with the relief portion (27) in a vehicle plan view.

5. The straddled vehicle according to claim 1 or 2, wherein
the relief portion (27) penetrates the support member (21) in the vehicle back-and-forth direction, and
the seat frame (14, 15) penetrates the support member (21) through the relief portion (27) in the vehicle back-and-forth direction.

6. The straddled vehicle according to claim 1 or 2, wherein
the relief portion (27) penetrates the support member (21) and the outer lens (26) in the vehicle back-and-forth direction, and
the seat frame (14, 15) penetrates the taillight unit (7) through the relief portion (27) in the vehicle back-and-forth direction.

7. The straddled vehicle according to claim 6, further comprising:
a tail cover (10a) disposed behind the outer lens (27), the tail cover (10a) being configured to cover the relief portion (27) from behind.
